# EUROPEAN PATENT APPLICATION

(11) **EP 0 979 779 A2**
(43) Date of publication of application: **16.02.2000**
(21) Application number: 99105827.2
(22) Date of filing: 23.03.1999
(51) Int. Cl.: B65D 21/08, B65D 81/02, B65D 85/64

(54) **Reusable protective package for bulky articles**

(30) Priority: 03.08.1998 IT MI981820
(71) Applicant: IAR-SILTAL S.p.A., 20081 Abbiategrasso (Milano) (IT)
(72) Inventor: Spadoni, Giovanni, 20081 Abbiategrasso (Milano) (IT)
(74) Representative: Lecce, Giovanni

(57) **Abstract**

A package (10) re-utilisable and re-cyclable, particularly suitable for bulky apparatuses such as washing-machines, dish-washers and furniture in general, comprises:
- at least a half-shell (12, 14) having a shape substantially complementary to that of the upper or lower front of the apparatus to be packaged, and provided peripherally with shaped seats or recessings (20), and
- a plurality of elements (16) for the protection of the corner or perimetric zones of the product, having at least at one end a profile complementary to that of said recessing or seat (20).

The half-shells (12, 14) may be coupled to one another to form a bag-like envelope, and the protection elements (16), preferably couples by twos, are inserted in said envelope.

## Description

The present invention relates to a re-utilisable and re-cyclable package.

In particular, the present invention relates to a package of the type especially suitable to circumscribe and to protect bulky products, constituted by a plurality of components coupleable to one another to form an integral structure having a contained size, easily transportable for subsequent uses.

As is known, the industrial products are subject to different handlings and transportations to reach, from the production place, the final use destination. The distribution includes for such products at least an intermediate transit step at storehouses and retailers, with the related loading and unloading handlings from the transportation means. Frequently, some products are stored at the beginning in the storehouse of the same manufacturer for some time, before being distributed, with intermediate stops in the facilities of wholesalers and retailers.

In general, all the industrial products are packaged in special containment envelopes which preserve their integrity during the transportation and storing handling. Said packages are of the so-called disposable type as, having terminated their specific protection function, they do not offer consumers a further re-use possibility. The only re-use possibility would be a prerogative of the original manufacturer, but at the present state of the distribution of industrial products this solution is unlikely to find an application. Packages are therefore eliminated by the final user, sometimes by the distributor who cares to their installation, in case of apparatuses and furniture in general.

The disposal of such wastes involves rather important problems: the packages are constituted in most cases by plastic material and they do not end up in most cases in places equipped with the means necessary for a rational differentiated collection, necessary for their re-cycling.

A sector wherein the problem is particular evident is, for instance, that of electric household appliances and kitchen furniture, which have large dimensions. In case of apparatuses such as washing machines, dish-washers and the like, the packages must be capable of protecting the products from accidental knocks in correspondence of the corners, and to damp concretely the vibrations which handling and transportation produce unavoidably on their mechanical and electric parts. For this reason, the packages utilised for these products comprise shells from expanded material, in particular polystyrene, which circumscribe the base and the upper front, and angle protections, generally from the same material as the shells, located along the corners of the apparatuses. The package is completed by a film from polyethylene or the like which wraps up the parts from expanded material and adheres to the same by thermoretractable effect.

These protection structures are conventionally eliminated on the installation of the apparatus, with the aforementioned drawbacks.

Their re-use is possible only theoretically, as it would involve the collection of the various components, often deteriorated, and their bringing back to the manufacturing firm; however, given the present structure of these packages, such solution is substantially unpracticable. The different components would deteriorate further and unavoidably, and once they have been transported, only a part of them, in the best hypothesis, would reach their destination, which would require further sorting operations, to collect the pieces to be re-used, to form again complete packages.

Object of this invention is to obviate the above drawbacks.

More particularly, object of this invention is to provide a package suitable to be repeatedly re-used, as well as re-cycled after several re-use cycles.

A further object of this invention is to provide a package suitable to preserve the integrity of the components.

A further object of this invention is to provide a package for bulky apparatuses, suitable to ensure a high level of resistance and reliability in the time and also such as to be easily and economically realised.

From its more general aspect, the present invention allows to achieve these and still other objects, which will be obvious thanks to the following description, by means of a re-utilisable and re-cyclable package, especially suitable for bulky apparatuses, comprising a plurality of components assembled and fastened to one another by means of fasteners, said components comprising at least a half-shell, having a shape substantially complementary to that of the upper or lower front of the apparatus to be packaged, and a plurality of elements protecting the corner and perimetric zones of the apparatus, wherein said components are sized and conformed so as to be coupleable to each other, and contained in an envelope having minimum overall dimensions, formed by at least one of said components.

Preferably, at least a half-shell forms the envelope and is provided with shaped seats or recesses, and the protection elements are provided with a profile complementary to that of said seats or recesses.

Therefore, object of the present invention is a re-utilisable and-re-cyclable envelope, particularly suitable for bulky apparatuses, comprising:
- at least a half-shell having a shape substantially complementary to that of the upper and lower fronts of the product to be packaged and peripherally provided with shaped seats or recesses, and
- a plurality of protection elements for the corner or perimetric zones of said product, obtained as one integral piece or in several pieces longitudinally connectable to each other and having, at least at one end, a profile complementary to that of the shaped seat or recess of the half-shell.

The construction and functional characteristics of the re-utilisable and re-cycable package of the present invention will be better understood thanks to the following description, wherein reference is made to the attached drawings which represent a preferred embodiment, solely reported by way of non limiting example, and wherein:

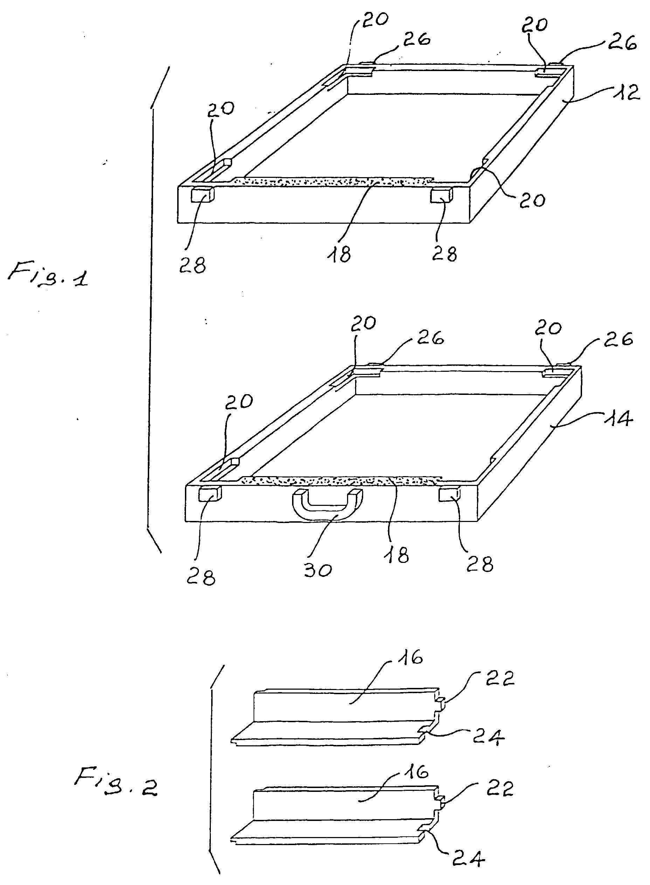

Figure 1 is the perspective schematic view of two components of the package of the present invention, i.e. the upper and lower half-shells which, complementary and connected to one another, form the envelope for the remaining components;
Figure 2 is the schematic front view of a couple of components of the package which form a corner-protecting vertical element;
Figure 3 is the perspective schematic view of the half-shells of Figure 1, in the first of which all the components of the package forming the corner-protecting vertical elements are grouped;
Figure 4 is the perspective schematic view of the couple of components of Figure 2, approached to one another for the insertion into one of said half-shells;
Figure 5 is the perspective schematic view of the envelope formed by said half-shells, wherein all the components forming the corner-protecting vertical elements are inserted;
Figure 6 is the perspective schematic view of the package of the present invention applied by way of example to a washing-machine.

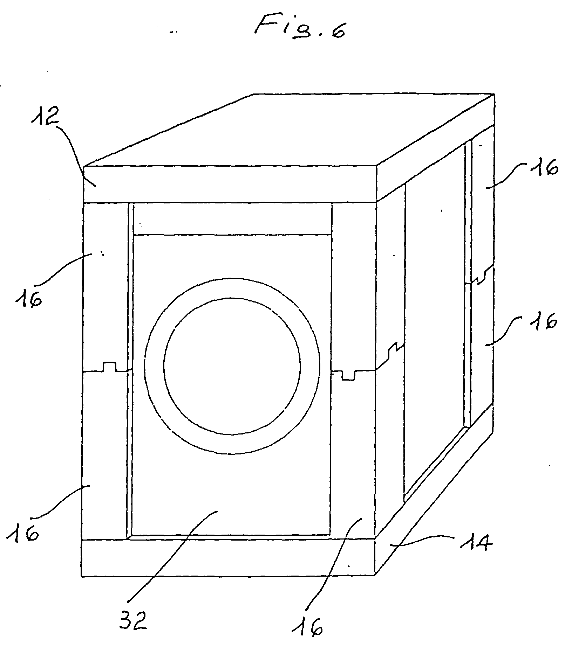

Even though the re-utilisable and re-cyclable package of the present invention, indicated by 10 in Figure 5, is represented in the figures by way of example with special reference to the protection of a washing-machine, schematised in Figure 6, it is obvious that the same may be used, with the same structural set up, for products of other types and size.

Package 10 comprises two opposite half-shells, an upper one 12 and a lower one 14, and a plurality of protection elements 16 connectable to one another, preferably by tows, and to said half-shells.

Said half-shells 12, 14 are preferably obtained from rigid plastic material, for instance polypropylene or polyethylene, and house in their inside a small basin 18 having a complementary shape, obtained from soft material, such as for instance expanded polypropylene, polyethylene or polystyrene, rubber, polyurethane foams and the like. The internal profile of each of the basins 18 is purposive to the containment of the product to be packaged, and therefore it is variable as concerns the perimeter and the recessed and projecting sectors, according to the shape of said product.

At least along the angle portions of cisterns 18, shaped recesses 20 of any configuration and development are obtained, which form as many insertion and fitting-in seats for the protection elements 16.

The protection elements 16 may be obtained, for instance, from expanded polypropylene, polyethylene or polystyrene in the same way as cisterns 18, and form, as will be specified later on, protections along the corners of the product to be packaged, protecting it from accidental knocks during the handling and transportation.

For home appliances of the type illustrated in the figures, the width and depth dimensions are markedly smaller that their height, and for such apparatuses elements 16 are preferably constituted by two or more lengths coupleable to one another by clutches or like means, in order to allow the separation and the arrangement of the half-shells 12, 14, and to ensure theirs giving back and subsequent re-use. According to a preferred embodiment, the protection elements 16 have a square or L-profile, of a limited extension and equal along both orthogonally oriented branches, and have, at one end, a configuration complementary to that of the shaped recesses 20 obtained along the angle zones of cisterns 18.

The protection elements may be provided, in a position opposite to the end designed to couple with recesses 20, with shaped clutches 22, 24, having for instance a quadrangular section, for their coupling by twos or possible in greater number.

The two half-shells which circumscribe at the top and at the bottom the product to be packaged, are preferably provided with means 26 for the mutual hooking and their handling once they are coupled, and with engagement means 28 for their fastening.

Preferably, the hooking means 26 are constituted by one or more hinges, obtained integrally with the half-shells 12, 14 or applied and connected with known means; and the engagement means 28 are realised on the opposite front or on one or more adjoining fronts with respect to said hooking means 26, and are constituted by conventional dead bolts with extensions (not shown) for pressure-clutching.

The coupling of the two half-shells 12, 14 to each other is realised by other alternative means, such as for instance conventional rigid or elastic straps. Besides, to make the handling of said half-shells coupled to each other easier, a handle 30 of any shape and size is provided on at least one of them.

Preferably, the handle is placed on the front opposite to that whereon the hooking means 26 are fastened.

The package of the present invention can fulfil the protection function for which it is intended, and may be re-used, as the components may be coupled to one another in a precise manner and with overall dimensions essentially limited, remaining protected and being transportable again to the production source, without deterioration risks. In fact, the half-shells 12, 14 constitute, once they are coupled to each other, a bag-like envelope wherein the protection elements 16 which complete the package find a precise and stable housing. During the employment stage of package 10, the upper 12 and lower 14 half-shells are separated from one another and placed, in overturned position, on the upper and lower fronts of the apparatus to be packaged, for instance, a washing machine 32 (Figure 6). The protection elements 16, preferably coupled by twos by means of the shaped clutches 22, 24, are inserted at an end into recesses 20 of the two half-shells 12, 14 and placed in correspondence of the corners of the apparatus 32 to be packaged, protecting them. The package of the present invention is completed by a thermoretractable film that envelopes all the components and protects adequately the side surface of apparatus 32 from knocks during the handling and the transportation.

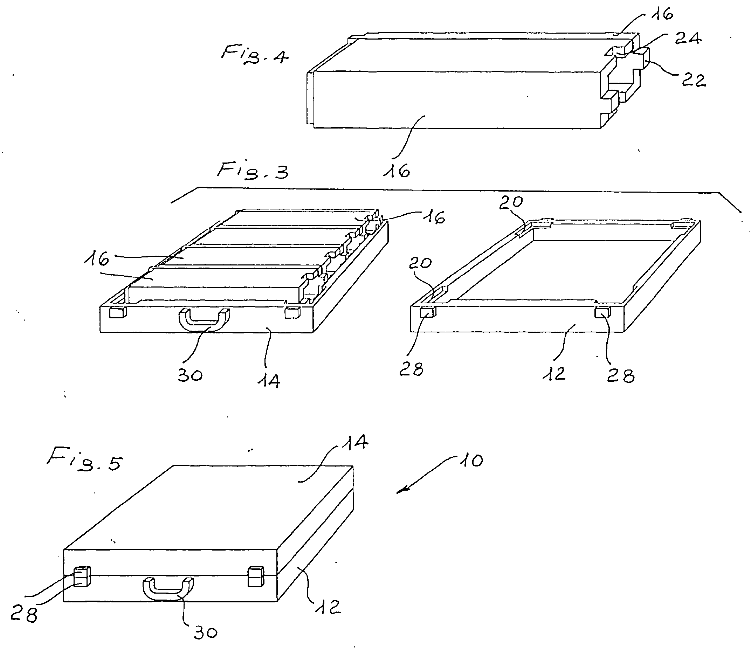

At the time when the apparatus, having reached its destination, is freed from the package for the exhibition or the installation, all of the components 12, 14, 16 which have preserved its integrity, are easily groupable to each other and re-utilisable, except for the thermoratractable film. The opposite upper 12 and lower 14 half-shells are connected to each other through hinges 26 or the like and form an envelope having a regular form, easily transportable and/or storable. The protection elements 16 have a precise housing in said envelope, for instance coupled by twos in opposite direction, as shown in detail on Figure 4 and as a whole on Figure 3.

The coupling or clutching sectors 22, 24 of the protection elements 16 with one another and/or recesses 20 wherein one end of said protection elements 16 engages may have shapes and dimensions other that those described and illustrated by way of example.

Said protection elements 16, in addition to the connection points defined by clutches 22, 24, may be provided with other means having different functions along the joining lines.

The protection elements 16 may be obtained as one integral element and may have sectors having different thicknesses in given zones, to allow the angular folding at the time of the positioning in the half-shells 12, 14.

One of said half-shells 12, 14 may possibly be constituted by a plate-like body, coupleable to the other half-shell by means of a slide-clutch on at least two fronts, to realise a bag-like envelope having a capacity sufficient to contain the elements of the package.

The package of the present invention achieves many advantages. By fulfilling its function of containment and protection of the products to be transported and/or stored, it reduces substantially the drawbacks connected to the disposal or the dispersion of its components. The materials from which it is made ensure many re-use steps, without giving rise to transportation problems, given the possibility of compacting the whole in the best way.

Having terminated its function repeated for several cycles, because of the unavoidable deterioration of the half-shells or the protection elements, the package may be passed on to the differentiated re-cycling, presenting in any case, also during this step, new advantages thanks to its possibility of being compacted into an easily transportable envelope.

While the present invention has been described with reference to a preferred embodiment, various changes and variants may be introduced in the re-cyclable envelope of the present invention in the light of the aforementioned teaching. It is therefore understood that the present invention comprises all the changes and variants that fall within the spirit and the protection scope of the following claims.

## Claims

1. A re-utilisable and re-cyclable package (10), particularly suitable for bulky apparatuses, comprises a plurality of components (12, 14, 16), assembled and fastened to each other by fasteners, said components comprising at least a half-shell (12, 14) having a shape substantially complementary to that of one of the upper or lower fronts of the apparatus to be packaged, and a plurality of protection elements (16) for the corner and perimetric zones of the apparatus, said package being characterised in that said components are so sized and configured as to be coupleable to one another and contained in an envelope having minimum overall dimensions, formed by at least one of said components.

2. The package according to claim 1, wherein at least a half-shell (12, 14) forms the envelope and is provided with shaped seats or recesses (20), and wherein the protection elements (16) are provided with a profile complementary to that of said seats or recesses (20).

3. The package according to claim 1 or 2, wherein at least a half-shell (12, 14) has a shape substantially complementary to that of one of the upper and lower fronts of the product to be packaged, and is peripherally provided with shaped seats or recesses (20) and wherein the protection elements for the angle or perimetric zones of said product are obtained as one integral piece or several pieces connectable to one another in the longitudinal direction and have, at least at one end, a profile complementary to that of the shaped seat or recess (20) of the half-shell (12, 14).

4. The package according to claim 1, wherein the containment envelope is formed by two complementary half-shells (12, 14), coupled to each other.

5. The package according to any of the preceding claims, wherein the half-shells (12, 14) are from rigid plastic material and are provided, on at least one front, with hooking means (26) and on the opposite front, with mutual engagement means (28).

6. The package according to any of the preceding claims, wherein all the protection elements (16) are provided in an position opposite to the end designed to couple with recesses (20) of shaped cluthes (22, 24) for their coupling.

7. The package according to any of the preceding claims, wherein a basin (18), having a profile complementary to that of the half-shells (12, 14) and made from expanded plastic material, is inserted in each of the half-shells (12, 14), said basin (18) being provided, in correspondence of the apexes, with said recesses (20).

8. The package according to any of the preceding claims, wherein the protection elements (16) have a basically L-shaped profile.

9. The package according to any of the preceding claims, wherein the protection elements (16) are obtained as one integral piece or in several pieces and have, along their development, one or more sectors having a differentiated thickness for the folding.

10. The package according to any of the preceding claims, wherein at least one of the half-shells (12, 14) is provided with a handle (30) obtained integrally of fixed on the front provided with said hooking (26) or engagement (28) means.
